(19) Europäisches Patentamt
European Patent Office
Office européen des brevets

(11) **EP 4 095 550 A1**

(12) **EUROPEAN PATENT APPLICATION**
published in accordance with Art. 153(4) EPC

(43) Date of publication:
**30.11.2022 Bulletin 2022/48**

(21) Application number: **20919721.9**

(22) Date of filing: **30.10.2020**

(51) International Patent Classification (IPC):
**G01S 7/539** $^{(2006.01)}$

(52) Cooperative Patent Classification (CPC):
**G01S 7/539**

(86) International application number:
**PCT/CN2020/125351**

(87) International publication number:
**WO 2021/164311 (26.08.2021 Gazette 2021/34)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(30) Priority: **17.02.2020 CN 202010097884**

(71) Applicant: **Huawei Technologies Co., Ltd.
Shenzhen, Guangdong 518129 (CN)**

(72) Inventor: **SHEN, Yujie
Shenzhen, Guangdong 518129 (CN)**

(74) Representative: **Maiwald GmbH
Elisenhof
Elisenstraße 3
80335 München (DE)**

(54) **DETECTION METHOD AND DEVICE**

(57)    A detection method and apparatus are provided and applied to the field of intelligent driving technologies. The method is applicable to a detection apparatus in a moving state, and includes: determining, based on electrical signal values of N consecutive frames in echo signals, that ground reflection exists; and adjusting an echo threshold sequence, where the echo threshold sequence is a sequence of electrical signal thresholds used to distinguish between a target echo and a ground echo. Based on the received echo signals, it is determined whether ground reflection exists in a detection signal of an ultrasonic radar, and then the echo threshold sequence is adjusted, so as to improve detection accuracy.

FIG. 5A

**(Cont. next page)**

CONT.
FROM
FIG. 5A

CONT.
FROM
FIG. 5A

S506

Store the received electrical
signal values in the frame

S507

Determine whether
stored electrical signal values
corresponding to a same moment in at
least two consecutive frames
are the same

Yes

No

S508

Set, to a first threshold
sequence, the electrical
signal values
corresponding to a
moment that is in the
current frame and that is
the same as a moment in
another period

S509

Send an alarm signal to
a corresponding device

FIG. 5B

**Description**

This application claims priority to Chinese Patent Application No. 202010097884.2, filed with the China National Intellectual Property Administration on February 17, 2020 and entitled "DETECTION METHOD AND APPARATUS", which is incorporated herein by reference in its entirety.

**TECHNICAL FIELD**

The present invention relates to the field of intelligent driving technologies, and in particular, to a detection method and apparatus.

**BACKGROUND**

With development of artificial intelligence, more and more products are developing in networked, intelligent, and unmanned directions. Especially in an automobile industry, automobiles have been redefined as intelligent mobile terminals, and have shifted from mechanical products to electronic products.

For an intelligent driving vehicle, an ultrasonic sensor is a common sensor used for parking sensing, and is currently widely used in a reversing alarm and automatic parking. In these application scenarios, human participation in driving or real-time monitoring of a vehicle does not impose any high requirement on ultrasonic waves. Subsequently, as parking automation becomes increasingly high, a human driver will not participate in a driving process at all. Therefore, an existing signal processing technology of the ultrasonic sensor cannot meet a requirement for high reliability.

**SUMMARY**

Embodiments of this application provide a detection method and apparatus, to determine, based on received echo signals, whether a detection signal of an ultrasonic radar has ground disruption, and then adjust an echo threshold sequence, so as to improve detection accuracy.

According to a first aspect, a detection method is provided, where the method is applicable to a detection apparatus in a moving state, and includes: determining, based on electrical signal values of N consecutive frames in echo signals, that ground reflection exists, where N is a positive integer greater than 2; and adjusting an echo threshold sequence, where the echo threshold sequence is a sequence of electrical signal thresholds used to distinguish between a target echo and a ground echo.

In the present invention, after echo signals of a plurality of frames are received, it is determined, by determining the electrical signal values corresponding to the echo signals of the plurality of consecutive frames, whether a detection signal has ground disruption, and if it is determined that the detection signal has the ground disruption, the echo threshold sequence is adjusted. This improves detection accuracy of the detection apparatus.

If electrical signal values at a same moment in a plurality of adjacent frames are completely the same, it indicates that an echo is generated due to the "ground disruption". To avoid a false alarm caused by the "ground disruption", a value of an electrical signal received in a current frame is set to a threshold sequence, to determine whether there is an obstacle within a safe distance. If the electrical signal values at the same moment in the plurality of adjacent frames are partially the same, there is the obstacle within the safe distance, and there is the "ground disruption". Therefore, the electrical signal value at the moment corresponding to the same electrical signal value in the threshold sequence is replaced with an electrical signal value that is in the current frame and that is the same as the electrical signal values of the plurality of other frames at the same moment. If the electrical signal values at the same moment in the plurality of adjacent frames are completely different, there is only an obstacle within the safe distance.

The method may be executed by the detection apparatus. The detection apparatus is, for example, a detection device or an apparatus that can support the detection device in implementing a function required by the method, for example, a chip system. For example, if the detection device is a radar, for example, an ultrasonic radar or another radar, the detection apparatus may be a radar, or may be an apparatus that is disposed in a radar and that can support a function required by the radar to implement the method, for example, a chip system or another functional module.

In an implementation, the method further includes: determining the ground reflection based on driving information and the echo signals, where the driving information includes movement speed information and direction information of the detection apparatus on the move.

In the present invention, it is determined, based on movement speed information, direction information, and echo signals of the plurality of frames, whether a sounding signal of the ultrasonic radar has ground disruption, so as to ensure that the detected ground disruption is in a moving process of a target vehicle rather than in a stationary state. This improves accuracy.

In an implementation, the determining, based on electrical signal values of N consecutive frames in echo signals, that ground reflection exists includes: determining, based on the electrical signal values of the N consecutive frames in the echo signals, that continuous stable echo signals exist, where the stable echoes satisfy that an electrical signal value at a moment T in a first frame is the same as an electrical signal value at the moment T in a second frame, the first frame and the second frame are any one of the N frames, and the moment T is any moment in the frames.

In an implementation, the adjusting an echo threshold sequence includes: determining the electrical signal values in the first frame in the stable echoes as the echo threshold sequence, where the echo threshold sequence is determined based on the electrical signal values in the first frame in the stable echoes.

In an implementation, the method further includes: sending first indication information to an ultrasonic wave unit, where the first indication information is used to indicate the echo threshold sequence.

In the present invention, after indication information is sent to the ultrasonic radar, after receiving the echo signals, the ultrasonic radar actively filters out an electrical signal lower than the echo threshold sequence, and sends an electrical signal value that meets a requirement to the detection apparatus. This reduces calculation load of the detection apparatus.

In an implementation, before the determining, based on electrical signal values of N consecutive frames in echo signals, that ground reflection exists, the method includes: determining that the electrical signal values of the N consecutive frames are greater than a first threshold, where the first threshold is an electrical signal value corresponding to noise in an environment.

In the present invention, due to existence of environmental noise in the air, the ultrasonic radar inevitably receives a noise signal in the environment. Therefore, a relatively small threshold is usually required to filter background noise, so as to improve accuracy.

In an implementation, N is determined based on a moving speed of the detection apparatus.

In the present invention, a quantity of frames whose electrical signal values are to be compared needs to be determined based on a driving speed of the target vehicle. If the speed is too high, the quantity of frames whose electrical signal values are to be compared is relatively small. If the speed is too low, the quantity of frames whose electrical signal values are to be compared is relatively large. In this way, the quantity of frames is obtained flexibly, thereby reducing the calculation load of the detection apparatus.

According to a second aspect, a detection apparatus is provided. For example, the detection apparatus is the detection apparatus described above. The detection apparatus is configured to perform the method according to any one of the first aspect or the possible implementations. Specifically, the detection apparatus may include modules configured to perform the method in any one of the first aspect or the possible implementations, for example, include a communications unit and a processing unit. For example, the detection apparatus is a detection device, or a chip system or another component disposed in a detection device. For example, the detection device is radar. The communications unit is configured to receive echo signals. The processing unit is configured to determine, based on electrical signal values of N consecutive frames in the echo signals, that ground reflection exists, where N is a positive integer greater than 2; and adjust an echo threshold sequence, where the echo threshold sequence is an electrical signal threshold sequence used to distinguish between a target echo and a ground echo.

In the present invention, after receiving echo signals of a plurality of frames, the detection apparatus determines, by determining the electrical signal values corresponding to the echo signals of the plurality of consecutive frames, whether a detection signal has ground disruption, and if determining that the detection signal has the ground disruption, adjusts the echo threshold sequence. This improves detection accuracy of the detection apparatus.

In an implementation, the processing unit is further configured to determine the ground reflection based on driving information and the echo signals, where the driving information includes movement speed information and direction information of the detection apparatus on the move.

In an implementation, the processing unit is specifically configured to determine, based on the electrical signal values of the N consecutive frames in the echo signals, that continuous stable echo signals exist, where the stable echoes satisfy that an electrical signal value at a moment T in a first frame is the same as an electrical signal value at the moment T in a second frame, the first frame and the second frame are any one of the N frames, and the moment T is any moment in the frames.

In an implementation, the processing unit is specifically configured to determine the electrical signal values in the first frame in the stable echoes as the echo threshold sequence, where the echo threshold sequence is determined based on the electrical signal values in the first frame in the stable echoes.

In an implementation, the processing unit is specifically configured to send first indication information to an ultrasonic unit, where the first indication information is used to indicate the echo threshold sequence.

In an implementation, the processing unit is specifically configured to determine that the electrical signal values of the N consecutive frames are greater than a first threshold, where the first threshold is an electrical signal value corresponding to noise in an environment.

In an implementation, N is determined based on a moving speed of the detection apparatus.

According to a third aspect, a detection apparatus is provided, where the detection apparatus is, for example, the detection apparatus described above. The detection apparatus includes a processor and a communications interface. For example, the processor may implement a function of the processing unit according to the second aspect, and the communications interface may implement a function of the communications unit according to the second aspect. Optionally, the detection apparatus may further include a memory, configured to store computer instructions. The processor, the communications interface, and the memory are coupled to each other, to implement the method according to any one of the first aspect or the possible implementations. Alternatively, the detection apparatus may not include a memory, and the memory may be located outside the detection apparatus. For example, when the processor executes the computer instructions stored in the memory, the detection apparatus is enabled to perform the method in any one of the first aspect or the implementations. For example, the detection apparatus is a detection device, or a chip system or another component disposed in a detection device. For example, the detection device is a radar.

If the detection apparatus is a detection device, the communications interface is implemented as, for example, a transceiver (or a transmitter and a receiver) in the detection device, and the transceiver is implemented as, for example, an antenna, a feeder, and a codec in the detection device. Alternatively, if the detection apparatus is a chip disposed in the detection device, the communications interface is, for example, an input/output interface such as an input/output pin of the chip. The communications interface is connected to a radio frequency transceiver component in the detection device, to send and receive information through the radio frequency transceiver component.

In an implementation, the method provided in the first aspect or the various optional implementations is jointly implemented by the radar apparatus and the detection apparatus. The detection apparatus is a processor disposed outside the radar apparatus, or may be a processor disposed in the radar apparatus, for example, a central processing unit. Specifically, the radar apparatus is configured to perform content performed by the foregoing detector or collection module, and the detection apparatus is configured to perform content performed by the foregoing processor or processing module. In other words, the method provided in this application may be jointly implemented by the radar apparatus and the detection apparatus.

According to a fourth aspect, a detection system is provided, where the detection system includes the detection apparatus according to the second aspect or the detection apparatus according to the third aspect.

According to a fifth aspect, an intelligent vehicle is provided, where the intelligent vehicle includes the detection apparatus according to the second aspect or the detection apparatus according to the third aspect. Alternatively, the intelligent vehicle is the detection apparatus according to the second aspect or the detection apparatus according to the third aspect.

According to a sixth aspect, a computer-readable storage medium is provided. The computer-readable storage medium is configured to store computer instructions. When the computer instructions are run on a computer, the computer is enabled to perform the method according to any one of the first aspect or the possible implementations.

According to a seventh aspect, a chip is provided. The chip includes a processor and a communications interface. The processor is coupled to the communications interface, and is configured to implement the method according to any one of the first aspect or the optional implementations.

Optionally, the chip may further include a memory. For example, the processor may read and execute a software program stored in the memory, to implement the method according to any one of the first aspect or the optional implementations. Alternatively, the memory may not be included in the chip, but is located outside the chip. This is equivalent to that the processor may read and execute a software program stored in an external memory, to implement the method according to any one of the first aspect or the optional implementations.

According to an eighth aspect, a computer program product including instructions is provided. The computer program product is configured to store computer instructions. When the computer instructions are run on a computer, the computer is enabled to perform the method according to any one of the first aspect or the possible implementations.

## BRIEF DESCRIPTION OF DRAWINGS

The following briefly describes the accompanying drawings used to describe embodiments or the conventional technology.

FIG. 1 is a schematic diagram of a scenario in which a vehicle-mounted radar works on a vehicle;
FIG. 2 is a schematic diagram of a scenario in which a pitch angle at which a transmit end of a target vehicle transmits an ultrasonic wave changes according to an embodiment of this application;
FIG. 3 is a schematic diagram of a structure of a signal detection apparatus according to an embodiment of this application;
FIG. 4 is a schematic diagram of scenarios of four different cases in which a target vehicle is situated according to an embodiment of this application;
FIG. 5A and FIG. 5B are a schematic flowchart of a signal processing method according to an embodiment of this application;

FIG. 6 is a schematic diagram of a structure of a processing apparatus according to an embodiment of this application;
FIG. 7 is a schematic diagram of a structure of a processing apparatus according to an embodiment of this application;
FIG. 8 is a schematic diagram of a structure of a processing apparatus according to an embodiment of this application; and
FIG. 9 is a schematic diagram of a structure of a processing apparatus according to an embodiment of this application.

## DESCRIPTION OF EMBODIMENTS

To make objectives, technical solution, and advantages of embodiments of this application clearer, the following further describes embodiments of this application in detail with reference to the accompanying drawings.

The following describes some terms in embodiments of this application, to facilitate understanding of a person skilled in the art.

(1) The detection apparatus is, for example, a sensor, and the sensor is, for example, a radar, for example, an ultrasonic radar or another type of radar. Alternatively, the sensor may be a sensor that is disposed on a radar and that is configured to collect a point cloud of a target object.

(2) In the embodiments of this application, "at least one" means one or more, and "a plurality of' means two or more. "And/or" describes an association relationship between associated objects, and indicates that three relationships may exist. For example, A and/or B may indicate the following three cases: A exists alone, both A and B exist, and B exists alone, where A and B may be singular or plural. The character "/" generally indicates an "or" relationship between the associated objects. At least one of the following items (pieces) or a similar expression thereof refers to any combination of these items, including any combination of singular items (pieces) or plural items (pieces). For example, at least one of a, b, or c may indicate: a, b, c, a-b, a-c, b-c, or a-b-c, where a, b, and c may be singular or plural.

In addition, unless otherwise stated, in embodiments of this application, ordinal numbers such as "first" and "second" are intended to distinguish between a plurality of objects, but are not intended to limit sizes, shapes, content, orders, time sequences, priorities, importance, or the like of the plurality of objects.

The foregoing describes concepts of some terms in embodiments of this application. The following describes technical features in embodiments of this application.

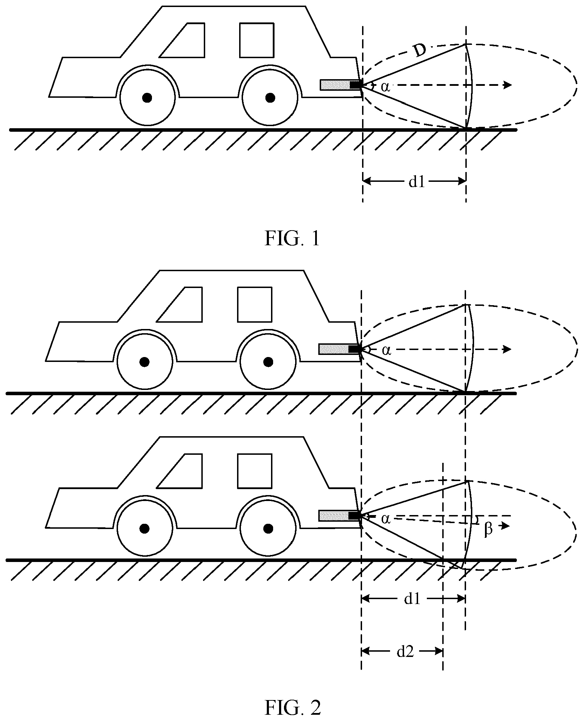

FIG. 1 is a schematic diagram of a scenario in which a vehicle-mounted radar works on a vehicle. As shown in FIG. 1, to prevent a security risk caused by an obstacle such as a person, an animal, a roadblock, or another vehicle being too close to a target vehicle when the target vehicle backs up or moves forward at a low speed, a set of security system is installed on the target vehicle. The system includes a processor (not shown in the figure) and an ultrasonic sensor. The ultrasonic sensor includes a transmit end and a receive end. The transmit end is configured to transmit an ultrasonic signal, and the receive end is configured to receive the ultrasonic signal. Usually, the ultrasonic sensor is mounted on a housing of the target vehicle, or is mounted inside the target vehicle. Then, a hole is drilled on the housing of the target vehicle, and the transmit end and the receive end of the ultrasonic sensor are embedded in the hole on the housing, to ensure that the ultrasonic sensor smoothly transmits an ultrasonic signal to and receives an ultrasonic signal from a surrounding of the target vehicle.

After the ultrasonic signal sent by the transmit end is blocked by the obstacle, the ultrasonic signal is returned and projected to the receive end. After the receive end receives the reflected ultrasonic signal, the processor calculates a distance S between the obstacle and the target vehicle based on a moment t1 at which the transmit end transmits the ultrasonic signal and a moment t2 at which the receive end receives the ultrasonic signal. A calculation formula is as follows:

$$S = v\,(t2 - t1)\,/2 \tag{1}$$

v is a speed at which the ultrasonic signal propagates in the air, t1 is a moment at which the transmit end transmits the ultrasonic signal, and t2 is a moment at which the receive end receives the ultrasonic signal.

Then, it is determined whether the distance S is less than a set safe distance D. If the calculated distance S is less than the safe distance D, it indicates that the obstacle approaches the target vehicle, and there is a safety risk. If the calculated distance S is greater than the safe distance D, it indicates that the obstacle is relatively far away from the target vehicle, and there is no safety risk.

The safe distance D is a shortest distance required by the target vehicle to avoid an obstacle when finding the obstacle when the target vehicle backs up, moves forward at a low speed, or the like. A specific value thereof needs to be determined according to different situations, and may also be set by a user.

For example, as shown in FIG. 1, when the transmit end transmits an ultrasonic signal right behind the target vehicle in a direction parallel to the ground, as the ultrasonic signal is propagated, an ultrasonic signal close to an angle of depression within a range of a pitch angle $\alpha$ at which the ultrasonic signal transmitted by the transmit end is diffused is irradiated on the ground. If a distance d (d=d1cos<$\alpha$/2> in the figure) between the transmit end and the ground is less than the safe distance D, the reflected ultrasonic signal is received by the receive end. After performing calculation based on a time difference, the processor may also consider that there is an obstacle within the safe distance D. This results in a false alarm

In the conventional technology, to resolve disruption (also referred to as ground reflection or "ground disruption", and for ease of description, such disruption is subsequently referred to as "ground disruption") of a reflected signal caused by irradiation of the ultrasonic signal on the ground, when the ultrasonic sensor is installed, the pitch angle $\alpha$ at which the ultrasonic signal transmitted by the transmit end is diffused is modulated upward as much as possible, so that the distance d in which the "ground disruption" occurs is greater than the safe distance D. In this way, a case in which the false alarm is generated due to "ground disruption" may not occur within the safe distance D.

However, after the vehicle is delivered from the factory, if a collision occurs in a process of driving the vehicle by the user, or a support used to fasten the ultrasonic sensor is loose or deformed in a long-term use process, a position of the pitch angle $\alpha$ at which the ultrasonic signal transmitted by the transmit end of the ultrasonic sensor is diffused changes. As shown in FIG. 2, after the position of the pitch angle $\alpha$ is moved downward by $\beta$ degrees, the distance d (d=d2cos<$\alpha$/2> in the figure) in which "ground disruption" occurs is less than the safe distance D. In this case, the processor still considers that there is the obstacle within the safe distance D. This results in a false alarm

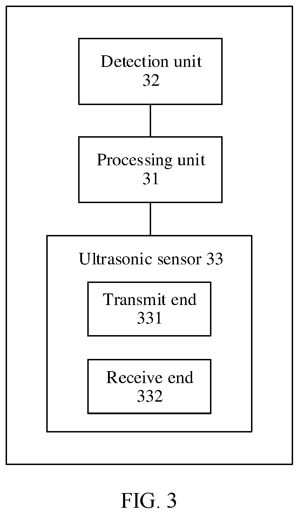

In this embodiment of this application, to resolve the false alarm caused by non-standard installation or a change in a running process of the vehicle at the position of the pitch angle $\alpha$, the detection apparatus is provided. As shown in FIG. 3, the apparatus includes a processing unit 31, a detection unit 32, and an ultrasonic sensor 33. The ultrasonic sensor includes a transmit end 331 and a receive end 332. The detection apparatus may be disposed inside the intelligent vehicle, and is configured to detect a target. In a running process of the intelligent vehicle, the detection apparatus is also in a same running state as the intelligent vehicle.

The detection unit 32 is configured to determine driving information. Specifically, the driving information includes driving direction information and driving speed information. For example, the detection unit 32 may include an accelerometer and a gyroscope. After determining the vehicle driving information, the detection unit 32 sends the driving information to the processing unit 31. It should be noted that the detection unit 32 is an optional component of the detection apparatus. In a possible implementation, the detection unit 32 is integrated outside the detection apparatus, and sends the driving information to the detection apparatus by using a communications interface.

Optionally, after receiving the driving information sent by the detection unit 32, the processing unit 31 may determine, based on the driving information, whether the vehicle moves forward or backs up, determine a driving speed of the vehicle, and then determine whether to enable the ultrasonic sensor 33 to work.

In an embodiment, when the processing unit 31 determines that the vehicle moves forward and a speed is lower than a specified threshold speed, it indicates that the vehicle travels slowly. To prevent a tail-tracking accident from occurring in a process in which the target vehicle travels slowly, the ultrasonic sensor 33 is enabled to work.

In another embodiment, when the processing unit 31 determines that the vehicle backs up and a speed is lower than a specified threshold speed, it indicates that the vehicle is backing up. To prevent the target vehicle from colliding with an obstacle in the process of backing up, the ultrasonic sensor 33 is enabled to work.

Certainly, in this embodiment of this application, a case in which the ultrasonic sensor 33 is enabled to work is not limited to the foregoing two cases. Alternatively, the processing unit 31 may actively enable, based on a user requirement, the ultrasonic sensor 33 to work, so as to meet the requirement of the user for a specific scenario.

In addition, the processing unit 31 may further choose to turn on a specific ultrasonic sensor 33 on the target vehicle based on a specific scenario. For example, in a "slowly moving forward" scenario, the ultrasonic sensors 33 at a head position and a rear position of the target vehicle are turned on, to prevent the target vehicle from colliding with a front vehicle and colliding with a rear vehicle. In a "backing up" scenario, the ultrasonic sensor 33 at the rear position of the target vehicle is turned on, to prevent the target vehicle from colliding with the obstacle.

In this embodiment of this application, the processing unit 31 is configured to determine, based on electrical signal values of N consecutive frames in the echo signals, that ground reflection exists, where N is a positive integer greater than 2. Specifically, before enabling the ultrasonic sensor 33 to work, the processing unit 31 first calculates a time period $t_D$ based on the safe distance D and the formula (1). In this case, the time period $t_D$ indicates a time period from a moment at which the transmit end 331 transmits an ultrasonic signal to a moment at which the ultrasonic signal is reflected back to the receive end 332 when the ultrasonic signal encounters an obstacle at the safe distance D. Then, the processing unit 31 controls the transmit end 331 of the ultrasonic sensor 33 to periodically transmit the ultrasonic signal, and controls the receive end 332 to receive, in each frame, an ultrasonic signal within a time period from a moment at which the ultrasonic signal is started to be transmitted to the time period $t_D$. In this way, the receive end 332 is prevented from receiving the ultrasonic signal without limitation, so as to reduce a workload of the processing unit 31. In addition, an ultrasonic signal that is reflected back by an obstacle that does not hinder the target vehicle is avoided to be received by the receive end 332 due to continuous diffusion of the ultrasonic signal, so as to reduce disruption.

In addition, a time difference T between frames in which the processing unit 31 controls the ultrasonic sensor 33 to transmit an ultrasonic signal should be greater than the time period $t_D$, that is:

$$T > t_D = 2D/v \tag{2}$$

T is a time difference between frames of an ultrasonic signal sent by the ultrasonic sensor 33, D is a safe distance, and v is a propagation speed of the ultrasonic signal in the air.
If the time difference T between the frames is not greater than the time period $t_D$, an ultrasonic signal sent in a previous frame may arrive at the receive end 332 in a next frame after being reflected back, resulting in disorder when the processing unit 31 calculates an obstacle distance.
After receiving the ultrasonic signal, the receive end 332 of the ultrasonic sensor 33 converts the ultrasonic signal into an electrical signal of corresponding strength based on strength of the received ultrasonic signal, and then sends the electrical signal to the processing unit 31. The processing unit 31 determines, based on a relationship between a value of a received electrical signal and a value of a corresponding electrical signal in each frame at a same moment, whether there is an obstacle within the safe distance D and whether there is "ground disruption".
In an embodiment, the processing unit 31 further needs to determine that electrical signal values of N consecutive frames are greater than a first threshold, where the first threshold is an electrical signal value corresponding to noise in an environment. Specifically, when the electrical signal value received by the processing unit 31 is zero or not greater than the set first threshold, it indicates that the receive end 332 does not receive the ultrasonic signal, that is, there is no obstacle or "ground disruption" within the safe distance D. If the electrical signal value received by the processing unit 31 is greater than the set first threshold, it indicates that the receive end 332 receives the ultrasonic signal. In this case, the processing unit 31 compares whether electrical signal values corresponding to the same moment in a plurality of adjacent frames are the same or close to the same.
In a moving process of the target vehicle, if all electrical signal values corresponding to the same moment in the plurality of consecutive frames are completely the same or nearly the same, that is, echo signals received in the plurality of consecutive frames are completely the same, it indicates that the "ground disruption" occurs in this case. This is because in a moving process of the target vehicle, existence of an obstacle that keeps a fixed distance from the target vehicle is not considered. In other words, in a process in which the target vehicle moves, the distance between the obstacle and the target vehicle definitely changes. "Nearly the same" may be considered that a threshold is first set, and if a difference between all electrical signal values corresponding to the same moment in the plurality of consecutive frames does not exceed the specified threshold, it is considered that all the electrical signal values corresponding to the same moment in the plurality of consecutive frames are close to same.
To reduce impact of a phenomenon of "ground disruption" on target detection, the processing unit 31 adjusts an echo threshold sequence. The echo threshold sequence is an electrical signal threshold sequence used to distinguish between a target echo and a ground echo. Specifically, electrical signal values corresponding to different moments in the current frame are set to a first threshold sequence. Determining whether the electrical signal value is greater than the first threshold sequence is used as a reference for determining whether there is an obstacle within the safe distance D, where the current frame is one of the plurality of consecutive frames in which all electrical signal values corresponding to the same moment are completely the same or nearly the same in a process of determining "ground disruption". In other words, when determining that all the electrical signal values corresponding to the same moment in the current frame and a continuous frame of the current frame are completely the same or nearly the same, the processing unit 31 may determine that there is "ground disruption". Further, the processing unit 31 may set the electrical signal values corresponding to all moments in the current frame to the first threshold sequence. The first threshold is a background noise threshold. Due to existence of background noise (that is, environmental noise in air), the receive end 332 inevitably receives a noise signal in an environment. Therefore, a relatively small threshold is generally required to filter the background noise. The first threshold sequence is each electrical signal value at a corresponding moment in a frame.
In a possible implementable embodiment, the processing unit 31 sends indication information to the ultrasonic sensor 33, where the indication information is used to indicate an echo threshold sequence, so that after receiving echo signals, the ultrasonic sensor 33 actively filters out an electrical signal that is lower than the echo threshold sequence at a corresponding moment, and sends an electrical signal value that meets a requirement to the detection apparatus. This reduces calculation load of the processing unit 31.
If some electrical signal values corresponding to a same moment in the adjacent frame are different, it indicates that there is an obstacle within the safe distance D, and there is the "ground disruption". In this case, some electrical signal values corresponding to the same moment in the plurality of frames are the same, and it indicates that "ground disruption" occurs. The processing unit 31 sets, to the first threshold sequence, electrical signal values that are in the current frame and that correspond to a same moment in another frame. Determining whether an electrical signal value is greater than the first threshold sequence is used as a reference for determining whether there is an obstacle within the safe distance D. Some electrical signal values corresponding to the same moment in the plurality of frames are different, and it indicates that there is an obstacle at a distance corresponding to the moment within the safe distance D.

In a possible implementable embodiment, a manner of setting, to the first threshold sequence, an electrical signal value that is in the current frame and that corresponds to a same moment in another frame is as follows: Frame duration is T. If an electrical signal value within a time period from 0 to t1 (t1 is any moment within T) in a frame is the same as an electrical signal value within a time period from 0 to t1 in another adjacent frame, and the electrical signal value within a time period from t1 to T is different from an electrical signal value within the time period from t1 to T in the another adjacent frame, the processing unit 31 replaces the electrical signal value within the time period from 0 to t1 in the first threshold sequence with the electrical signal value within the time period from 0 to t1 in the current frame, and the electrical signal value within the time period from t1 to T in the first threshold sequence remain unchanged.

If electrical signal values corresponding to a same moment in a plurality of adjacent frames are completely different, it indicates that there is an obstacle within the safe distance D.

When detecting that there is an obstacle within the safe distance D, the processing unit 31 sends an alarm signal to a corresponding device, so that the target vehicle automatically avoids the obstacle or the driver knows that there is an obstacle behind the vehicle, and operates the vehicle in a timely manner to avoid the obstacle.

As mentioned above, the processing unit 31 needs to receive and compare the electrical signal values at different moments in the plurality of adjacent frames. In an embodiment, the processing unit 31 in this application needs to make a decision based on the driving speed of the target vehicle detected by the detection unit 32. If the rate is too high, the quantity of frames to be compared is small. If the rate is too low, the quantity of frames to be compared is large. In this way, a quantity of frames is obtained flexibly, thereby reducing the calculation load of the processing unit 31.

In this embodiment of this application, a specific process in which the processing unit 31 controls the ultrasonic sensor 33 to work is described by using an example in which the target vehicle backs up at a specific speed.

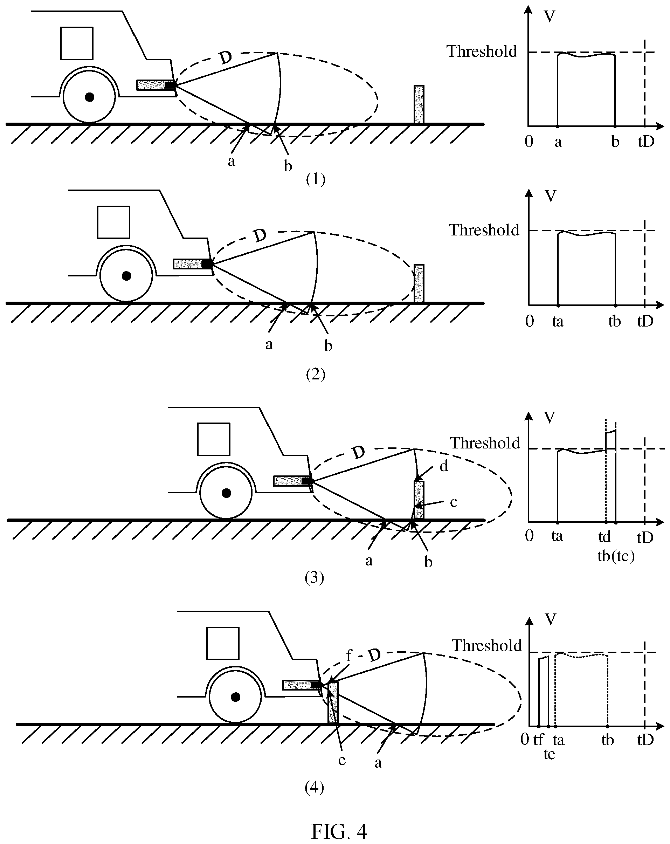

For example, as shown in FIG. 4(1), the processing unit 31 controls the transmit end 331 of the ultrasonic sensor 33 to transmit an ultrasonic signal and records a moment at which the ultrasonic signal is transmitted. Because the pitch angle α at which the transmit end 331 transmits the ultrasonic signal shifts downward, as the ultrasonic signal is propagated backward, reflection occurs on the ground between a point a and a point b, and the reflected ultrasonic signal is received by the receive end 332. Because distances between the ultrasonic sensor 33 and positions between the point a and the point b are different, moments at which the receive end 332 receives ultrasonic signals reflected from the positions between the point a and the point b are also different.

In this case, the ultrasonic sensor 33 converts the ultrasonic signals of different strengths received at different moments into corresponding voltage values, and sends the voltage values to the processing unit 31. A relationship between the voltage values received by the processing unit 31 at different moments is shown in a two-dimensional coordinate system on the right of FIG. 4(1). Then, the processing unit 31 determines, based on whether the received voltage values at different moments are greater than the set first threshold, whether an echo is generated within the safe distance D. If the received voltage value is greater than the first threshold, it indicates that there is an object that generates an echo within the safe distance D. In this case, the processing unit 31 cannot determine whether the echo is generated because there is an obstacle within the safe distance D, or the echo is generated due to the "ground disruption". Therefore, the processing unit 31 controls the ultrasonic sensor 33 to continue to transmit an ultrasonic signal.

As shown in FIG. 4(2), as the target vehicle continues to back up, the processing unit 31 controls the transmit end 331 of the ultrasonic sensor 33 to transmit the ultrasonic signal for the second time. In this case, because the obstacle does not reach the safe distance D, the reflected ultrasonic signal is still reflected by the ground. In this case, the ultrasonic sensor 33 converts the ultrasonic signals of different strengths received at different moments into corresponding voltage values, and sends the voltage values to the processing unit 31. A relationship between the voltage values received by the processing unit 31 at different moments is shown in a two-dimensional coordinate system on the right of FIG. 4(2).

Then the processing unit 31 compares the voltage value received when the ultrasonic signal is sent for the first time with the voltage value received when the ultrasonic signal is sent for the second time, and determines whether the voltage value of transmitting the ultrasonic signal for the first time is the same as the voltage value of transmitting the ultrasonic signal for the second time at the same time. With reference to FIG. 4(1) and FIG. 4(2), voltage values at various moments when the ultrasonic signal is sent for the first time are completely the same as voltage values at various moments when the ultrasonic signal is sent for the second time (or in a plurality of subsequent times). In this case, the processing unit 31 determines that there is no obstacle within the safe distance D, and the echo is generated due to the "ground disruption".

To avoid a false alarm caused by "ground disruption", the processing unit 31 uses the maximum voltage value received when the ultrasonic signal is sent for the first time or the ultrasonic signal is sent for the second time as the threshold to determine whether there is an obstacle within the safe distance D.

As shown in FIG. 4(3), as the target vehicle continues to back up, the processing unit 31 controls the transmit end 331 of the ultrasonic sensor 33 to transmit an ultrasonic signal for the third time. Because the obstacle just reaches the safe distance D, an echo generated in this case is reflected by the ground or the obstacle.

In this case, a distance from the transmit end 331 to a point d is between the distance from the transmit end 331 to the point a and the distance from the transmit end 331 to the point b. A distance from the transmit end 331 to a point c is the same as the distance from the transmit end 331 to the point b. Therefore, the ultrasonic signals received by the receive end 332 between a moment td and a moment tb(tc) are reflected back by the ground and the obstacle at the same time. In this way, a voltage value received by the processing unit 31 between the moment td and the moment tb(tc) is greater than the voltage value in the same time period when the ultrasonic signal is transmitted for the first or second time. A relationship is shown in a two-dimensional coordinate system on the right of FIG. 4(3).

Because the voltage value received between the moment td and the moment tb(tc) is greater than the first threshold, and is different from the received voltage value at the corresponding moment when the ultrasonic signal is sent for the second time (it indicates that some values are different), the processing unit 31 may determine that, when the ultrasonic signal is sent for the third time, the obstacle starts to enter the safe distance D at the moment td, and then send the alarm signal to the corresponding device.

As shown in FIG. 4(4), as the target vehicle continues to back up, because the obstacle has completely reached the safe distance D, a generated echo is reflected back only by the obstacle.

In this case, a distance from the transmit end 331 to a point e and a distance from the transmit end 331 to a point f are less than the distance from the transmit end 331 to the point a. Therefore, voltage values received by the processing unit 31 in a time period from a moment tf to a moment te are greater than the voltage values in the same time period when the ultrasonic signals are transmitted for the first time, the second time, or the third time. A relationship is shown in a two-dimensional coordinate system on the right of FIG. 4(4).

Because the voltage values received in the time period from the moment tf to the moment te are completely different from the voltage value received when the ultrasonic signal is transmitted for the first time, the processing unit 31 may determine that only the obstacle reflects an echo when the ultrasonic signal is transmitted this time.

Therefore, the processing unit 31 may determine that, when the ultrasonic signal is sent this time, the obstacle starts to enter the safe distance D at the moment tf, and then send an alarm signal to a corresponding device.

In this embodiment of this application, the processing unit 31 controls the ultrasonic sensor 33 to periodically transmit an ultrasonic signal. After the ultrasonic sensor 33 receives the ultrasonic signal due to an obstacle, ultrasonic signals of different strengths are converted into electrical signals of corresponding values, and then whether the electrical signal values at the same moment in the plurality of adjacent frames are the same are determined through comparison. If the electrical signal values at the same moment in the plurality of adjacent frames are the same, it indicates that the echo is generated due to the "ground disruption". To avoid a false alarm caused by the "ground disruption", the electrical signal value received in the current frame is set to a threshold sequence, to determine whether there is an obstacle within the safe distance D. If some of the electrical signal values at the same moment in the plurality of adjacent frames are the same, there is an obstacle within the safe distance D, and there is "ground disruption". In this way, the electrical signal value at a moment corresponding to the same electrical signal value in the threshold sequence is replaced with an electrical signal value that is in the current frame and that is the same as electrical signal values of a plurality of other frames at the same moment. If the electrical signal values are completely different, there is only an obstacle within the safe distance D.

It should be specially noted that in this embodiment of this application, an example in which one ultrasonic sensor is disposed at the rear of the target vehicle is used to describe the technical solutions of this application. A person skilled in the art can easily think of disposing a plurality of ultrasonic sensors on the target vehicle, and then disposing a plurality of acoustic wave sensors at various positions of the target vehicle, to meet requirements of the target vehicle in various cases.

In addition, the signal processing method provided in the embodiments of this application is applied to a vehicle to describe the technical solutions of this application. A person skilled in the art can easily think of that the signal processing method provided in this application may also be applied to a terminal device such as an intelligent robot or an intelligent vacuum cleaner, or even may be applied to a mobile device such as an airplane or a ship. This is not limited in this application.

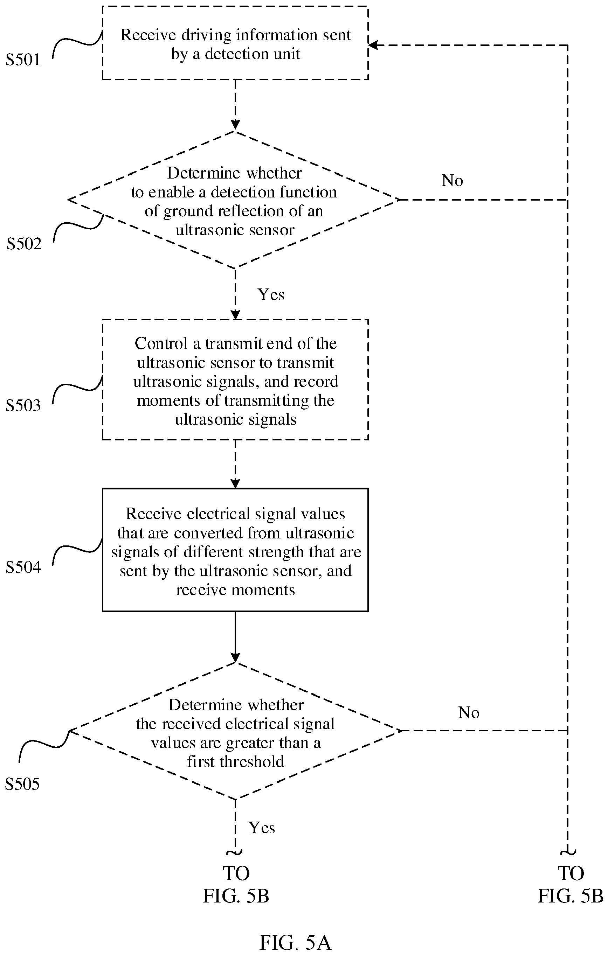

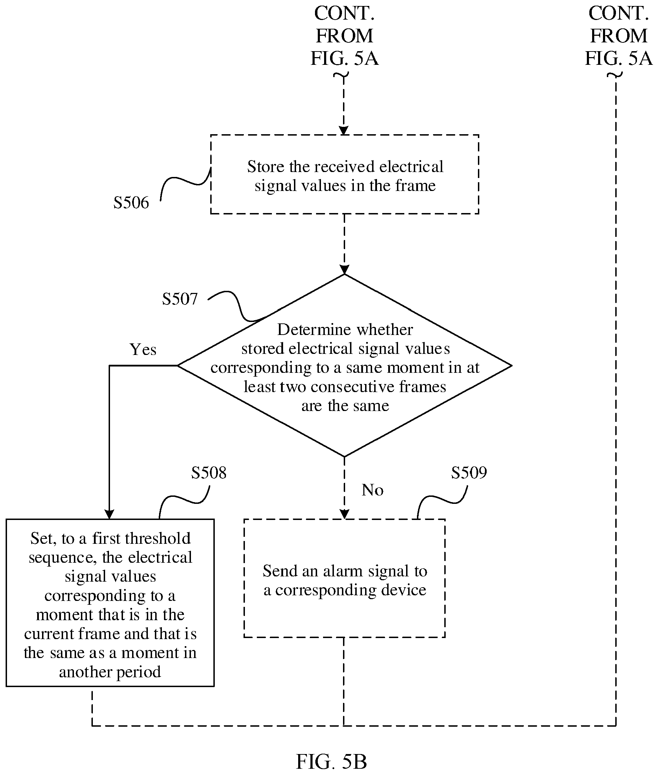

FIG. 5A and FIG. 5B are a flowchart of a working process of a processing unit according to an embodiment of this application. As shown in FIG. 5A and FIG. 5B, a specific working process of the processing unit 31 in this embodiment of this application is as follows.

Step S501: A processing unit 31 receives driving information of a target vehicle sent by a detection unit 32.

Step S502: The processing unit 31 performs analysis based on the received driving information to determine whether to enable a detection function of ground reflection of the ultrasonic sensor 33. If the ultrasonic sensor 33 is enabled to work, step S503 is performed; or if the ultrasonic sensor 33 is not enabled to work, step S501 is returned to be performed.

Cases in which the processing unit 31 determines, based on the driving information sent by the detection unit 32, whether to enable a detection function of ground reflection of the ultrasonic sensor 33 are as follows:

(1) Slowly moving forward: When the processing unit 31 determines that the vehicle moves forward and a speed is lower than a specified threshold speed, it indicates that the vehicle travels slowly.
(2) Backing up: When the processing unit 31 determines that the vehicle backs up and a speed is less than a specified threshold speed, it indicates that the vehicle backs up.

Certainly, the cases in which the detection function of the ground reflection of the ultrasonic sensor 33 is enabled are not limited to the foregoing two cases. Alternatively, the processing unit 31 may actively enable, based on a user requirement, the detection function of the ground reflection of the ultrasonic sensor 33, so as to meet the requirement of the user for a specific scenario.

In addition, the processing unit 31 may further choose to turn on a specific ultrasonic sensor 33 on the target vehicle based on a specific scenario. For example, in a "slowly moving forward" scenario, the ultrasonic sensors 33 at a head position and a rear position of the target vehicle are turned on, to prevent the target vehicle from colliding with a front vehicle and colliding with a rear vehicle. In a "backing up" scenario, the ultrasonic sensor 33 at the rear position of the target vehicle is turned on, to prevent the target vehicle from colliding with the obstacle.

It should be noted that a process in which the processing unit 31 controls whether the ultrasonic sensor 33 is enabled to work is an optional step, and the processing unit 31 may also keep the ultrasonic sensor 33 in a working state.

Step S503: The processing unit 31 controls the transmit end 331 of the ultrasonic sensor 33 to transmit an ultrasonic signal, and records a moment of transmitting the ultrasonic signal.

Step S504: After receiving ultrasonic signals, the receive end 332 of the ultrasonic sensor 33 converts the ultrasonic signals of different strength into electrical signals of corresponding values, and then sends the electrical signals to the processing unit 31, and the processing unit 31 records moments of receiving the ultrasonic signals by the ultrasonic sensor 33.

Step S505: The processing unit 31 determines whether the received electrical signal values are greater than a first threshold. If the received electrical signal values are greater than the first threshold, step S506 is performed; or if the received electrical signal values are not greater than the first threshold, step S501 is performed.

The first threshold is a background noise threshold. Due to existence of background noise (that is, environmental noise in air), the receive end 332 inevitably receives a noise signal in an environment. Therefore, a relatively small threshold is generally required to filter the background noise.

It should be noted that the process of filtering the background noise by the processing unit 31 is an optional step. If the background noise signal is much smaller than the echo information received by the ultrasonic sensor 33, the processing unit 31 may also choose not to filter the background noise.

Step S506: The processing unit 31 stores the electrical signal value received in this period. Then, step S501 and step S507 are performed.

Step S507: When electrical signal values of at least two frames are stored, the processing unit 31 determines whether stored electrical signal values corresponding to a same moment in at least two consecutive frames are the same. If the stored electrical signal values corresponding to the same moment in the at least two consecutive frames are the same, step S508 is performed; or if the stored electrical signal values corresponding to the same moment in the at least two consecutive frames are different, step S509 is performed.

Step S508: The processing unit 31 considers that an ultrasonic signal echo is generated due to "ground disruption", and uses electrical signal values corresponding to different moments in the current frame as a first threshold sequence to determine whether there is an obstacle within the safe distance D. Then, step S501 is performed.

Step S509: The processing unit 31 considers that there is an obstacle in a distance corresponding to the moment because different electrical signal values corresponding to a same moment in different frames appear within a safe distance D, and sends an alarm signal to a corresponding device. Then, step S501 is performed.

In the embodiments of this application, functional modules of the processing unit 31 may be obtained through division. For example, each function module may be obtained through division based on each corresponding function, or two or more functions may be integrated into one functional module. The integrated module may be implemented in a form of hardware, or may be implemented in a form of a software functional module. It should be noted that, in embodiments of this application, module division is an example, and is merely a logical function division. In actual implementation, another division manner may be used.

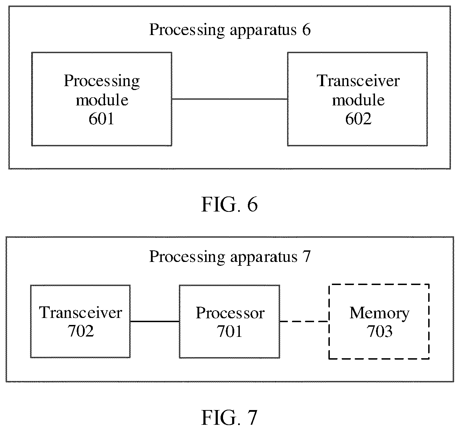

For example, when the functional modules of the processing unit 31 are obtained through division in an integrated manner, FIG. 6 is a possible schematic diagram of a structure of a detection apparatus in the foregoing embodiments of this application. The detection apparatus 6 is, for example, the processing unit 31 in the detection apparatus in the embodiment shown in FIG. 3. Alternatively, the detection apparatus 6 may be a chip or another functional component disposed in a detection device, and the detection device is, for example, a radar (or a radar apparatus). The detection apparatus 6 may include a processing module 601 and a transceiver module 602. When the sounding device is the radar, the processing module 601 may be a processor, for example, a baseband processor. The baseband processor may include one or more central processing units (central processing unit, CPU). The transceiver module 602 may be a transceiver, and may include an antenna, a radio frequency circuit, and the like. When the detection device is a component having the foregoing radar function, the processing module 601 may be a processor, for example, a baseband processor, and the transceiver module 602 may be a radio frequency unit. When the detection device is a chip system, the processing module 601 may be a processor of the chip system, and may include one or more central processing units. The transceiver module 602 may be an input/output interface of the chip system (for example, a baseband chip).

The processing module 601 may be configured to perform all operations of the processing unit 31 in the embodiment shown in FIG. 3, and/or configured to support another process of the technology described in this specification. The transceiver module 602 may be configured to perform all collection operations performed by the detection apparatus 6 in the embodiment shown in FIG. 3, for example, an operation of collecting an ultrasonic signal, and/or configured to support another process of the technology described in this specification.

In addition, the transceiver module 602 may be a functional module, and the functional module can complete both a sending operation and a receiving operation. For example, the transceiver module 602 may be configured to perform all sending operations and receiving operations performed by the detection apparatus 6. For example, when performing a sending operation, the transceiver module 602 may be considered as a sending module, and when performing a receiving operation, the transceiver module 602 may be considered as a receiving module. Alternatively, the transceiver module 602 may be a general term of two functional modules, where the two functional modules are a sending module and a receiving module. The sending module is configured to complete a sending operation. For example, the sending module may be configured to perform all sending operations performed by the detection apparatus 6. The receiving module is configured to complete a receiving operation. For example, the receiving module may be configured to perform all receiving operations performed by the detection apparatus 10.

Alternatively, the transceiver module 602 may not belong to the detection apparatus 6. For example, both the transceiver module 602 and the detection apparatus 6 are located in a same vehicle. The transceiver module 602 is, for example, a communications unit in the vehicle. The transceiver module 602 may communicate with the detection apparatus 6. In this case, the detection apparatus 6 may not need to actively detect a target, and performs processing only based on electrical signal data received by the transceiver module 602.

For example, the transceiver module 602 is configured to receive echo signals.

The processing module 601 is configured to: determine, based on electrical signal values of N consecutive frames in the echo signals, that ground reflection exists, where N is a positive integer greater than 2; and adjust an echo threshold sequence, where the echo threshold sequence is an electrical signal threshold sequence used to distinguish between a target echo and a ground echo.

The processing module 601 is further configured to determine ground reflection based on the driving information and the echo signals. The driving information includes movement speed information and direction information of the detection apparatus 6 on the move.

The processing module 601 is further configured to determine, based on electrical signal values of N consecutive frames in the echo signals, that continuous stable echo signals exist. The stable echoes satisfy that an electrical signal value at a moment T in a first frame is the same as an electrical signal value at the moment T in a second frame, the first frame and the second frame are any one of the N frames, and the moment T is any moment in the frames.

The processing module 601 is further configured to determine electrical signal values in the first frame in the stable echoes as the echo threshold sequence. The echo threshold sequence is determined based on the electrical signal values in the first frame in the stable echoes.

The processing module 601 is further configured to send first indication information to an ultrasonic unit. The first indication information is used to indicate the echo threshold sequence.

The processing module 601 is further configured to determine that the electrical signal values of the N consecutive frames are greater than the first threshold. The first threshold is an electrical signal value corresponding to noise in the environment.

In addition, N is determined based on a moving speed of the detection apparatus 6.

FIG. 7 is another possible schematic diagram of a structure of a detection apparatus according to an embodiment of this application. The detection apparatus 7 may include a processor 701 and a transceiver 702. Functions of the processor 701 and the transceiver 702 may be respectively corresponding to specific functions of the processing module 901 and the transceiver module 902 shown in FIG. 6. Details are not described herein again. Optionally, the detection apparatus 7 may further include a memory 703, configured to store program instructions and/or data for the processor 701 to read. Certainly, the detection apparatus 7 may not include the memory 703, and the memory 703 may be located outside the detection apparatus 7.

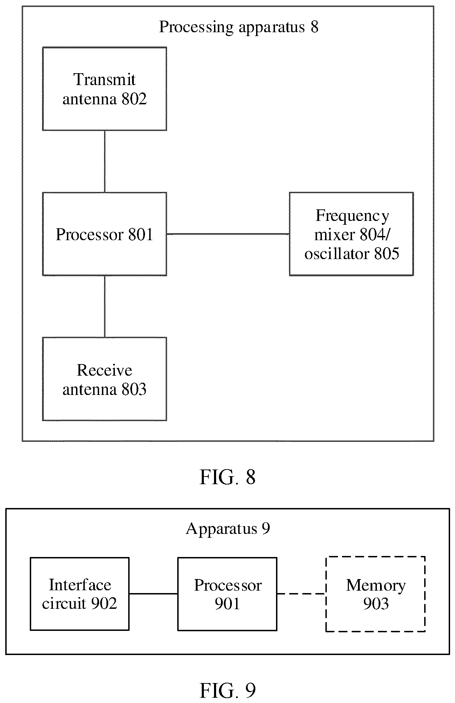

FIG. 8 is still another possible schematic diagram of a structure of a detection apparatus. The detection apparatus provided in FIG. 6 to FIG. 8 may implement functions of the detection apparatus in the foregoing embodiments. The detection apparatuses provided in FIG. 6 to FIG. 8 may be a part or all of radar apparatuses in an actual communication scenario, or may be a function module integrated in a radar apparatus or located outside the radar apparatus, for example, may be a chip system. Specifically, provided that a corresponding function is implemented, a structure and composition of the detection apparatuses are not specifically limited.

In this optional manner, the detection apparatus 8 includes a transmit antenna 801, a receive antenna 802, and a processor 803. Further optionally, the detection apparatus 8 further includes a frequency mixer 804 and/or an oscillator 805. Further optionally, the detection apparatus 8 may further include a low-pass filter, a directional coupler, and/or the like. The transmit antenna 801 and the receive antenna 802 are configured to support the detection apparatus 8 in performing radio communication, the transmit antenna 801 supports transmission of a radar signal, and the receive antenna 802 supports reception of a radar signal and/or reception of a reflected signal, to finally implement a detection function. The processor 803 performs some possible determining and/or processing functions. Further, the processor 803 controls operations of the transmit antenna 801 and/or the receive antenna 802. Specifically, the processor 803 controls the transmit antenna 801 to transmit a signal that needs to be transmitted, and a signal received through the receive antenna 802 may be transmitted to the processor 803 for corresponding processing. Components included in the detection apparatus 8 may be configured to cooperatively perform the method provided in the embodiment shown in FIG. 5A and FIG. 5B. Optionally, the detection apparatus 8 may further include a memory, configured to store program instructions and/or data. The transmit antenna 801 and the receive antenna 802 may be disposed separately, or may be integrated as a transceiver antenna, to perform corresponding transmitting and receiving functions.

FIG. 9 is a schematic diagram of a structure of an apparatus 9 according to an embodiment of this application. The apparatus 9 shown in FIG. 9 may be a detection apparatus, or may be a chip or a circuit that can implement a function of the detection apparatus. For example, the chip or the circuit may be disposed in a radar apparatus. The apparatus 9 shown in FIG. 9 may include a processor 901 (for example, the processing module 1001 may be implemented by using the processor 901, and the processor 1101 and the processor 901 may be, for example, a same component) and an interface circuit 902 (for example, the transceiver module 1002 may be implemented by using the interface circuit 902, and the transceiver 1102 and the interface circuit 902 are, for example, a same component). The processor 901 may enable the apparatus 9 to implement the steps performed by the detection apparatus in the method provided in the embodiment shown in FIG. 5A and FIG. 5B. Optionally, the apparatus 9 may further include a memory 903, and the memory 903 may be configured to store instructions. The processor 901 executes the instructions stored in the memory 903, to enable the apparatus 9 to implement the steps performed by the detection apparatus in the method provided in the embodiment shown in FIG. 5A and FIG. 5B.

Further, the processor 901, the interface circuit 902, and the memory 903 may communicate with each other through an internal connection channel, to transfer a control signal and/or a data signal. The memory 903 is configured to store a computer program. The processor 901 may invoke and run the computer program from the memory 903, to control the interface circuit 902 to receive a signal or send a signal, and complete the steps performed by the detection apparatus in the method provided in the embodiment shown in FIG. 5A and FIG. 5B. The memory 903 may be integrated into the processor 901, or may be disposed separately from the processor 901.

Optionally, if the apparatus 9 is a device, the interface circuit 902 may include a receiver and a transmitter. The receiver and the transmitter may be a same component or different components. When the receiver and the transmitter are a same component, the component may be referred to as a transceiver.

Optionally, if the apparatus 9 is a chip or a circuit, the interface circuit 902 may include an input interface and an output interface. The input interface and the output interface may be a same interface, or may be different interfaces.

Optionally, if the apparatus 9 is a chip or a circuit, the apparatus 9 may not include the memory 903. The processor 901 may read instructions (programs or code) in an external memory of the chip or the circuit, to implement the steps performed by the detection apparatus in the method provided in the embodiment shown in FIG. 5A and FIG. 5B.

Optionally, if the apparatus 9 is a chip or a circuit, the apparatus 9 may include a resistor, a capacitor, or another corresponding functional unit, and the processor 901 or the interface circuit 902 may be implemented by using the corresponding functional unit.

In an implementation, a function of the interface circuit 902 may be considered to be implemented by using a transceiver circuit or a transceiver-dedicated chip. The processor 901 may be considered to be implemented through a dedicated processing chip, a processing circuit, a processor, or a general-purpose chip.

In another implementation, the detection device provided in this embodiment of this application may be implemented by using a general-purpose computer. To be specific, program code for implementing functions of the processor 901 and the interface circuit 902 is stored in the memory 903, and the processor 901 implements the functions of the processor 901 and the interface circuit 902 by executing the program code stored in the memory 3303.

Functions and actions of the modules or units in the apparatus 9 that are listed above are merely examples for description, and functional units in the apparatus 9 may be configured to perform actions or processing processes performed by the detection apparatus in the embodiment shown in FIG. 3. To avoid repetition, detailed descriptions are omitted herein.

In still another optional implementation, when the detection apparatus is implemented by using software, all or some of the detection apparatus may be implemented in a form of a computer program product. The computer program product includes one or more computer instructions. When the computer program instructions are loaded and executed on a computer, the procedure or functions according to embodiments of this application are all or partially implemented. The computer may be a general-purpose computer, a dedicated computer, a computer network, or other programmable apparatuses. The computer instructions may be stored in a computer-readable storage medium or may be transmitted from a computer-readable storage medium to another computer-readable storage medium. For example, the computer instructions may be transmitted from a website, computer, server, or data center to another website, computer, server, or data center in a wired (for example, a coaxial cable, an optical fiber, or a digital subscriber line (digital subscriber line, DSL)) or wireless (for example, infrared, radio, or microwave) manner. The computer-readable storage medium may be any usable medium accessible by the computer, or a data storage device, for example, a server or a data center, integrating one or more usable media. The usable medium may be a magnetic medium (for example, a floppy disk, a hard disk, or a magnetic tape), an optical medium (for example, a DVD), a semiconductor medium (for example, a solid-state drive (solid-state drive, SSD)), or the like.

It should be noted that the processor included in the detection apparatus configured to perform the method provided in the embodiments of this application may be a central processing unit (central processing unit, CPU), a general purpose processor, a digital signal processor (digital signal processor, DSP), an application-specific integrated circuit (application-specific integrated circuit, ASIC), a field programmable gate array (field programmable gate array, FPGA) or another programmable logic device, a transistor logic device, a hardware component, or any combination thereof. The processor may implement or execute various example logical blocks, modules, and circuits described with reference to content disclosed in this application. The processor may be a combination of processors implementing a computing function, for example, a combination of one or more microprocessors, or a combination of the DSP and a microprocessor.

Method or algorithm steps described in combination with embodiments of this application may be implemented by hardware, or may be implemented by a processor by executing software instructions. The software instructions may include a corresponding software module, and the software module may be stored in a random access memory (random access memory, RAM), a flash memory, a read-only memory (read-only memory, ROM), an erasable programmable read-only memory (erasable programmable read-only memory, EPROM), an electrically erasable programmable read-only memory (electrically erasable programmable read-only memory, EEPROM), a register, a hard disk, a removable hard disk, a compact disc read-only memory (compact disc read-only memory, CD-ROM), or any other form of storage medium well known in the art. For example, a storage medium is coupled to a processor, so that the processor can read information from the storage medium or write information into the storage medium. Certainly, the storage medium may be a component of the processor. The processor and the storage medium may be disposed in an ASIC. In addition, the ASIC may be located in the detection apparatus. Certainly, the processor and the storage medium may alternatively exist in the detection apparatus as discrete components.

It may be understood that FIG. 6 to FIG. 9 show only a simplified design of the detection apparatus. In an actual application, the detection apparatus may include any quantity of transceivers, processors, controllers, memories, and other possible components.

If the detection apparatus does not include a transceiver module, an embodiment of this application further provides a detection system. The detection system includes the detection apparatus and the communications unit that are mentioned in the foregoing embodiments of this application. The communications unit is configured to perform the steps performed by the transceiver module (for example, the transceiver module 602) in the foregoing detection apparatus. The detection system may be a device, and each apparatus is located in the device and serves as a function module of the device. Alternatively, the detection system may include a plurality of devices, and the detection apparatus, the communications unit, and the like are located in different devices.

Based on the foregoing descriptions of the implementations, a person skilled in the art may clearly understand that for the purpose of convenient and brief descriptions, division into the foregoing functional modules is merely used as an example for descriptions. During actual application, the foregoing functions can be allocated to different functional modules for implementation based on a requirement. In other words, an inner structure of an apparatus is divided into different functional modules to implement all or a part of the functions described above.

In the several embodiments provided in this application, it should be understood that the disclosed apparatus and method may be implemented in other manners. For example, the described apparatus embodiment is merely an example. For example, the module or division into the units is merely logical function division and may be other division in actual implementation. For example, a plurality of units or components may be combined or integrated into another apparatus, or some features may be ignored or not performed. In addition, the displayed or discussed mutual couplings or direct couplings or communication connections may be implemented by using some interfaces. The indirect couplings or communication connections between the apparatuses or units may be implemented in electronic, mechanical, or other forms.

The units described as separate parts may or may not be physically separate, and parts displayed as units may be one or more physical units, may be located in one place, or may be distributed on different places. Some or all of the units may be selected based on actual requirements to achieve the objectives of the solutions of embodiments.

In addition, functional units in the embodiments of this application may be integrated into one processing unit, or each of the units may exist alone physically, or two or more units are integrated into one unit. The integrated unit may be implemented in a form of hardware, or may be implemented in a form of a software functional unit.

When the integrated unit is implemented in the form of a software functional unit and sold or used as an independent product, the integrated unit may be stored in a readable storage medium. Based on such an understanding, the technical solutions in embodiments of this application essentially, or the part contributing to the conventional technology, or all or some of the technical solutions may be implemented in a form of a software product. The software product is stored in a storage medium and includes several instructions for instructing a device (which may be a single-chip microcomputer, a chip, or the like) or a processor (processor) to perform all or some of the steps of the methods described in embodiments of this application. The foregoing storage medium includes any medium that can store program code, such as a USB flash drive, a removable hard disk, a ROM, a RAM, a magnetic disk, or an optical disc.

The foregoing descriptions are merely specific implementations of the embodiments of this application, but are not intended to limit the protection scope of the embodiments of this application. Any variation or replacement within the technical scope disclosed in this application shall fall within the protection scope of the embodiments of this application. Therefore, the protection scope of embodiments of this application shall be subject to the protection scope of the claims.

**Claims**

1. A detection method, wherein the method is applicable to a detection apparatus in a moving state and comprises:

   determining, based on electrical signal values of N consecutive frames in echo signals, that ground reflection exists, wherein N is a positive integer greater than 2; and
   adjusting an echo threshold sequence, wherein the echo threshold sequence is a sequence of electrical signal thresholds used to distinguish between a target echo and a ground echo.

2. The method according to claim 1, wherein the method further comprises:
   determining the ground reflection based on driving information and the echo signals, wherein the driving information comprises movement speed information and direction information of the detection apparatus on the move.

3. The method according to claim 1 or 2, wherein the determining, based on electrical signal values of N consecutive frames in echo signals, that ground reflection exists comprises:
   determining, based on the electrical signal values of the N consecutive frames in the echo signals, that continuous stable echo signals exist, wherein the stable echo signals satisfy that an electrical signal value at a moment T in a first frame is the same as an electrical signal value at the moment T in a second frame, the first frame and the second frame are any one of the N frames, and the moment T is any moment in the frames.

4. The method according to any one of claims 1 to 3, wherein the adjusting an echo threshold sequence comprises:
   determining the electrical signal values in the first frame in the stable echoes as the echo threshold sequence, wherein the echo threshold sequence is determined based on the electrical signal values in the first frame in the stable echoes.

5. The method according to any one of claims 1 to 4, wherein the method further comprises:
   sending first indication information to an ultrasonic wave unit, wherein the first indication information is used to indicate the echo threshold sequence.

6. The method according to any one of claims 1 to 5, wherein before the determining, based on electrical signal values of N consecutive frames in echo signals, that ground reflection exists, the method comprises:
   determining that the electrical signal values of the N consecutive frames are greater than a first threshold, wherein the first threshold is an electrical signal value corresponding to noise in an environment.

7. The method according to any one of claims 1 to 6, wherein N is determined based on a moving speed of the detection apparatus.

8. A detection apparatus, comprising a communications unit and a processing unit, wherein

   the communications unit is configured to receive echo signals; and
   the processing unit is configured to: determine, based on electrical signal values of N consecutive frames in the echo signals, that ground reflection exists, wherein N is a positive integer greater than 2, and adjust an echo threshold sequence, wherein the echo threshold sequence is a sequence of electrical signal thresholds used to distinguish between a target echo and a ground echo.

9. The apparatus according to claim 8, wherein the processing unit is further configured to determine the ground reflection based on driving information and the echo signals, wherein the driving information comprises movement speed information and direction information of the detection apparatus on the move.

10. The apparatus according to claim 8, wherein the processing unit is specifically configured to determine, based on the electrical signal values of the N consecutive frames in the echo signals, that continuous stable echo signals exist, wherein the stable echoes satisfy that an electrical signal value at a moment T in a first frame is the same as an electrical signal value at the moment T in a second frame, the first frame and the second frame are any one of the N frames, and the moment T is any moment in the frames.

11. The apparatus according to any one of claims 8 to 10, wherein the processing unit is specifically configured to determine the electrical signal values in the first frame in the stable echoes as the echo threshold sequence, wherein the echo threshold sequence is determined based on the electrical signal values in the first frame in the stable echoes.

12. The apparatus according to any one of claims 8 to 11, wherein the processing unit is specifically configured to send first indication information to an ultrasonic unit, wherein the first indication information is used to indicate the echo threshold sequence.

13. The apparatus according to any one of claims 8 to 12, wherein the processing unit is specifically configured to determine that the electrical signal values of the N consecutive frames are greater than a first threshold, wherein the first threshold is an electrical signal value corresponding to noise in an environment.

14. The apparatus according to any one of claims 8 to 13, wherein N is determined based on a moving speed of the detection apparatus.

15. An apparatus, comprising a detection unit, an ultrasonic sensor, and a processing unit, wherein

the detection unit is configured to detect a speed and a direction of the terminal device in a running process;
the ultrasonic sensor is configured to transmit an ultrasonic signal and receive an ultrasonic signal, and convert the received ultrasonic signal into an electrical signal; and
the processing unit is configured to perform the method according to any one of claims 1 to 7.

16. An automobile, configured to perform the method according to any one of claims 1 to 7.

17. A computer-readable storage medium, wherein the computer-readable storage medium stores a computer program, and when the computer program is executed in a computer, the computer is enabled to perform the method according to any one of claims 1 to 7.

18. A computing device, comprising a memory and a processor, wherein the memory stores executable code, and when the processor executes the executable code, the method according to any one of claims 1 to 7 is implemented.

FIG. 1

FIG. 2

FIG. 3

FIG. 4

S501 — Receive driving information sent by a detection unit

S502 — Determine whether to enable a detection function of ground reflection of an ultrasonic sensor

No

Yes

S503 — Control a transmit end of the ultrasonic sensor to transmit ultrasonic signals, and record moments of transmitting the ultrasonic signals

S504 — Receive electrical signal values that are converted from ultrasonic signals of different strength that are sent by the ultrasonic sensor, and receive moments

S505 — Determine whether the received electrical signal values are greater than a first threshold

No

Yes

TO
FIG. 5B

TO
FIG. 5B

FIG. 5A

CONT.
FROM
FIG. 5A

CONT.
FROM
FIG. 5A

S506

Store the received electrical
signal values in the frame

S507

Yes

Determine whether
stored electrical signal values
corresponding to a same moment in at
least two consecutive frames
are the same

S508

Set, to a first threshold
sequence, the electrical
signal values
corresponding to a
moment that is in the
current frame and that is
the same as a moment in
another period

No    S509

Send an alarm signal to
a corresponding device

FIG. 5B

Processing apparatus 6

| Processing module 601 | | Transceiver module 602 |

FIG. 6

Processing apparatus 7

| Transceiver 702 | Processor 701 | Memory 703 |

FIG. 7

Processing apparatus 8

Transmit
antenna 802

Processor 801

Frequency
mixer 804/
oscillator 805

Receive
antenna 803

FIG. 8

Apparatus 9

Interface
circuit 902

Processor
901

Memory
903

FIG. 9

## INTERNATIONAL SEARCH REPORT

International application No.

**PCT/CN2020/125351**

| A. | CLASSIFICATION OF SUBJECT MATTER |
|---|---|

G01S 7/539(2006.01)i

According to International Patent Classification (IPC) or to both national classification and IPC

| B. | FIELDS SEARCHED |
|---|---|

Minimum documentation searched (classification system followed by classification symbols)

G01S7/-

Documentation searched other than minimum documentation to the extent that such documents are included in the fields searched

Electronic data base consulted during the international search (name of data base and, where practicable, search terms used)

CNPAT, WPI, EPODOC, CNKI: 地面, 路面, 回波, 反射, 照地, 干扰, 目标, 障碍物, 确定, 判断, 阀值, 阈值, reflect+, disturb +, interference, ground, floor, road, threshold

| C. | DOCUMENTS CONSIDERED TO BE RELEVANT |
|---|---|

| Category* | Citation of document, with indication, where appropriate, of the relevant passages | Relevant to claim No. |
|---|---|---|
| A | CN 105705963 A (DENSO CORPORATION) 22 June 2016 (2016-06-22) description paragraphs [0023]-[0052], [0076] and figures 1-7 | 1-18 |
| A | CN 104412121 A (ROBERT BOSCH GMBH) 11 March 2015 (2015-03-11) entire document | 1-18 |
| A | CN 102116860 A (MANDO CORPORATION) 06 July 2011 (2011-07-06) entire document | 1-18 |
| A | CN 101322044 A (ROBERT BOSCH GMBH) 10 December 2008 (2008-12-10) entire document | 1-18 |
| A | DE 102018204996 A1 (ROBERT BOSCH G.M.B.H.) 10 October 2019 (2019-10-10) entire document | 1-18 |
| A | DE 102018103414 A1 (VALEO SCHALTER & SENSOREN G.M.B.H.) 22 August 2019 (2019-08-22) entire document | 1-18 |

☐ Further documents are listed in the continuation of Box C.   ☑ See patent family annex.

| * | Special categories of cited documents: |
|---|---|
| "A" | document defining the general state of the art which is not considered to be of particular relevance |
| "E" | earlier application or patent but published on or after the international filing date |
| "L" | document which may throw doubts on priority claim(s) or which is cited to establish the publication date of another citation or other special reason (as specified) |
| "O" | document referring to an oral disclosure, use, exhibition or other means |
| "P" | document published prior to the international filing date but later than the priority date claimed |

| "T" | later document published after the international filing date or priority date and not in conflict with the application but cited to understand the principle or theory underlying the invention |
|---|---|
| "X" | document of particular relevance; the claimed invention cannot be considered novel or cannot be considered to involve an inventive step when the document is taken alone |
| "Y" | document of particular relevance; the claimed invention cannot be considered to involve an inventive step when the document is combined with one or more other such documents, such combination being obvious to a person skilled in the art |
| "&" | document member of the same patent family |

| Date of the actual completion of the international search | Date of mailing of the international search report |
|---|---|
| **04 January 2021** | **29 January 2021** |

| Name and mailing address of the ISA/CN | Authorized officer |
|---|---|
| **China National Intellectual Property Administration (ISA/ CN)** <br> **No. 6, Xitucheng Road, Jimenqiao, Haidian District, Beijing 100088** <br> **China** | |
| Facsimile No. **(86-10)62019451** | Telephone No. |

Form PCT/ISA/210 (second sheet) (January 2015)

**INTERNATIONAL SEARCH REPORT**
Information on patent family members

| International application No. |
| --- |
| **PCT/CN2020/125351** |

| Patent document cited in search report | | | Publication date (day/month/year) | Patent family member(s) | | | Publication date (day/month/year) |
| --- | --- | --- | --- | --- | --- | --- | --- |
| CN | 105705963 | A | 22 June 2016 | WO | 2015040815 | A1 | 26 March 2015 |
| | | | | JP | 6146228 | B2 | 14 June 2017 |
| | | | | US | 2016238700 | A1 | 18 August 2016 |
| | | | | JP | 2015059764 | A | 30 March 2015 |
| | | | | DE | 112014004258 | T5 | 09 June 2016 |
| | | | | CN | 105705963 | B | 12 September 2017 |
| | | | | US | 9880273 | B2 | 30 January 2018 |
| CN | 104412121 | A | 11 March 2015 | CN | 104412121 | B | 04 July 2017 |
| | | | | DE | 102012211293 | A1 | 02 January 2014 |
| | | | | EP | 2867695 | A1 | 06 May 2015 |
| | | | | WO | 2014000956 | A1 | 03 January 2014 |
| | | | | EP | 2867695 | B1 | 08 July 2020 |
| CN | 102116860 | A | 06 July 2011 | DE | 102010051493 | A1 | 07 July 2011 |
| | | | | DE | 102010051493 | B4 | 23 February 2017 |
| | | | | CN | 101788659 | B | 03 April 2013 |
| | | | | KR | 101053855 | B1 | 03 August 2011 |
| | | | | US | 8344940 | B2 | 01 January 2013 |
| | | | | US | 2010182199 | A1 | 22 July 2010 |
| | | | | KR | 20100086422 | A | 30 July 2010 |
| | | | | CN | 101788659 | A | 28 July 2010 |
| CN | 101322044 | A | 10 December 2008 | DE | 102005057973 | A1 | 06 June 2007 |
| | | | | US | 2009251990 | A1 | 08 October 2009 |
| | | | | US | 8064285 | B2 | 22 November 2011 |
| | | | | DE | 102005057973 | B4 | 23 February 2017 |
| | | | | EP | 1960808 | A1 | 27 August 2008 |
| | | | | WO | 2007065779 | A1 | 14 June 2007 |
| DE | 102018204996 | A1 | 10 October 2019 | WO | 2019193087 | A1 | 10 October 2019 |
| | | | | US | 20200341129 | A1 | 29 October 2020 |
| DE | 102018103414 | A1 | 22 August 2019 | | None | | |

Form PCT/ISA/210 (patent family annex) (January 2015)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 202010097884